# EUROPÄISCHE PATENTANMELDUNG

(11) **EP 1 388 825 A2**
(43) Veröffentlichungstag der Anmeldung: **11.02.2004**
(21) Anmeldenummer: 03010160.4
(22) Anmeldetag: 06.05.2003
(51) Int. Cl.: G07F 19/00

(54) **Vorrichtung zum Durchführen gesicherter Transaktionen an einem Bankautomaten**

(30) Priorität: 02.08.2002 DE 10235498
(71) Anmelder: Wincor Nixdorf International GmbH, 33106 Paderborn (DE)
(72) Erfinder: Nolte, Michael, 33034 Brakel (DE); Osterholz, Gerhard, 33154 Salzkotten (DE)

(57) **Zusammenfassung**

Bei einer Vorrichtung zum Durchführen gesicherter Transaktionen an einem Bankautomaten, der eine Datenverarbeitungsanlage (14) enthält, die mit einem Host-Computer (20), einer Bank und über einen Controller (16) mit einer Dateneingabevorrichtung (18) verbunden ist, wobei eine kryptografische Einheit (22) zum Verschlüsseln und Entschlüsseln von Daten vorgesehen ist, die zwischen der Datenverarbeitungsanlage (14) und dem Host-Computer (20) ausgetauscht werden, umfaßt die kryptografische Einheit (22) eine Chipkarte (30), deren Chip für die Ausführung der kryptografischen Funktionen ausgebildet ist, einen Chipkarten-Lesemodul (28), der mit der Datenverarbeitungsanlage (14) des Bankautomaten verbunden ist, und mindestens einen Sensor (32, 34), der auf unautorisierte Manipulationen an der kryptografischen Einheit (22), dem Lesemodul (28) und/oder der Chipkarte (30) anspricht und ein entsprechendes Signal an eine übergeordnete Instanz abgibt.

## Beschreibung

Die Erfindung betrifft eine Vorrichtung zum Durchführen gesicherter Transaktionen an einem Bankautomaten, der eine Datenverarbeitungsanlage enthält, die mit einem Host-Computer einer Bank und über einen Controller mit einer Dateneingabevorrichtung verbunden ist, wobei eine kryptografische Einheit zum Verschlüsseln und Entschlüsseln von Daten vorgesehen ist, die zwischen der Datenverarbeitungsanlage des Bankautomaten und dem Host-Computer ausgetauscht werden.

Bankautomaten stehen den Kunden heute rund um die Uhr zur Verfügung. Es gibt ferner bereits Bankautomaten, die an das Internet angeschlossen sind. Es wird daher immer wieder versucht, den Datenverkehr innerhalb des Bankautomaten oder mit einem Host-Computer direkt oder über das Internet zu manipulieren. Zudem hat das Wartungspersonal Zugang zum Inneren des Bankautomaten. Auch hier besteht ein gewisses Risiko, das diese Möglichkeit für Manipulationsversuche genutzt wird. Man hat daher bereits kryptografische Einheiten vorgesehen, um die zwischen dem Bankautomaten und dem Host-Computer ausgetauschten Daten zu verschlüsseln bzw. zu entschlüsseln.

Der Erfindung liegt die Aufgabe zugrunde, Manipulationen und Manipulationsversuche an der kryptografischen Einheit zu erschweren und zumindest zu erkennen und eine entfernte Datenverarbeitungsanlage über die Manipulationen zu informieren.

Diese Aufgabe wird erfindungsgemäß dadurch gelöst, daß die kryptografische Einheit eine Chipkarte, deren Chip für die Ausführung der kryptografischen Funktionen ausgebildet ist, und einen Chipkarten-Lesemodul umfaßt, der mit der Datenverarbeitungsanlage des Bankautomaten verbunden ist, und daß die kryptografische Einheit mindestens einen Sensor hat, der auf unautorisierte Manipulationen an der kryptografischen Einheit, dem Lesemodul und/oder der Chipkarte anspricht und der ein entsprechendes Signal an eine übergeordnete Instanz abgibt.

Die Verwendung einer Chipkarte bietet die Möglichkeit, die für die Verschlüsselung und Entschlüsselung erforderlichen Daten und Schlüssel sowie die erforderliche Verschlüsselungssoftware häufig zu ändern, ohne daß hierzu die kryptografische Einheit oder der Bankautomat für längere Zeit außer Betrieb genommen werden müssen. Dies bietet eine erhöhte Sicherheit gegen das Ausspähen von Schlüsseln und Verschlüsselungsroutinen und erhöht damit die Sicherheit der Vorrichtung gegen Manipulationsversuche. Auf der anderen Seite stellt der genannte Sensor sicher, daß jeder Versuch, an die Chipkarte zu gelangen, diese aus dem Lesemodul herauszunehmen oder gegen eine andere Chipkarte zu ersetzen, zumindest erkannt und gemeldet wird. Damit wiederum wird vermieden, daß eine unautorisierte Person die leichte Austauschbarkeit der Chipkarte dazu benutzt, eigene Verschlüsselungssoftware in das Gerät einzuführen.

Die kryptografische Einheit kann ein gesichertes abschließbares Gehäuse haben, wobei der mindestens eine Sensor auf das unautorisierte Öffnen des Gehäuses anspricht. Zweckmäßigerweise besteht dieses Gehäuse aus Metall, so daß es auch eine elektrische Abschirmung bietet, welche die elektromagnetische Manipulation des Chips auf der Chipkarte verhindert.

Der Sensor oder ein weiterer Sensor kann aber beispielsweise auch auf das unautorisierte Entfernen der Chipkarte aus dem Lesemodul oder ein Austauschen der Chipkarte ansprechen.

Vorzugsweise ist die übergeordnete Instanz der oben genannte Controller. Dieser Controller kann so ausgebildet sein, daß er in Abhängigkeit eines von der kryptografischen Einheit erhaltenen Sensorsignals eine Alarmeinrichtung aktiviert. Diese kann beispielsweise am Ort des Bankautomaten oder am Ort des Host-Computers angeordnet sein, um die verantwortlichen Personen über den Manipulationsversuch zu informieren.

Der Controller kann so ausgebildet sein, daß er die Stromversorgung für die Datenverarbeitungsanlage des Bankautomaten zumindest steuert. Neben der Aktivierung der Alarmeinrichtung kann er dann in Abhängigkeit eines von der kryptografischen Einheit empfangenen Sensorsignales mindestens einen Teil der Stromversorgung der Datenverarbeitungsanlage abschalten, so daß der Bankautomat nicht mehr benutzt werden kann, wenn ein Manipulationsversuch entdeckt wird.

In der Regel hat der Controller einen Zwischenspeicher zur Speicherung von von der Dateneingabeeinrichtung empfangenen Daten. Zweckmäßigerweise verhindert der Controller die Weitergabe der in dem Zwischenspeicher gespeicherten Daten an die Datenverarbeitungsanlage des Bankautomaten, sobald er von der kryptografischen Einheit einen Manipulationsversuch meldende Sensorsignale empfängt. Alternativ oder zusätzlich dazu kann der Controller auch die in dem Zwischenspeicher gespeicherten Daten löschen. Damit ist es nicht möglich, über die Dateneingabeeinrichtung, beispielsweise eine Tastatur noch irgendwelche Transaktionsdaten einzugeben, wenn ein Manipulationsversuch entdeckt wurde.

Zum zusätzlichen Schutz kann die kryptografische Einheit innerhalb des Tresors des Bankautomaten angeordnet sein. In diesem Falle kann ein eigenes Metallgehäuse entfallen. In diesem Falle besteht allerdings immer noch die Gefahr, daß das Wartungspersonal versucht, die kryptografische Einheit zu manipulieren.

Ebenso kann der Controller innerhalb des Tresors des Bankautomaten angeordnet sein, wobei der Controller und/oder die kryptografische Einheit beispielsweise auf eine Platine der Datenverarbeitungsanlage des Bankautomaten angeordnet sind.

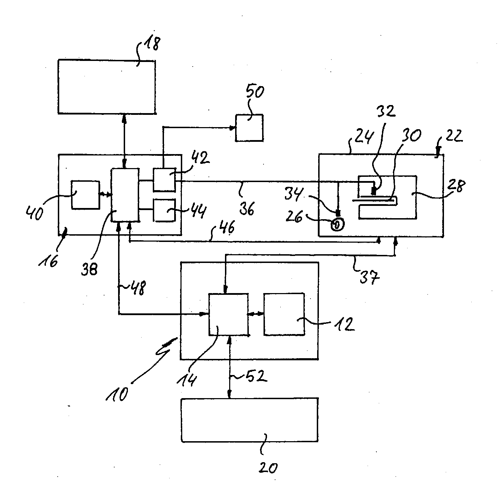

Weitere Merkmale und Vorteile der Erfindung ergeben sich aus der folgenden Beschreibung, welche in Verbindung mit der beigefügten Zeichnung die Erfindung anhand eines Ausführungsbeispieles erläutert. Die einzige Figur zeigt ein schematisches Blockschaltbild der erfindungsgemäßen Vorrichtung.

In der Figur ist mit 10 der Tresor eines Bankautomaten bezeichnet, der eine Banknotenspeichereinheit 12 und eine Datenverarbeitungsanlage, beispielsweise einen PC 14 enthält. Der PC 14 steht in Verbindung mit einem Controller 16, der seinerseits mit einer Dateneingabeeinrichtung, beispielsweise einer Tastatur 18 verbunden ist. Der PC 14 des Bankautomaten ist ferner an einen Host- oder Netzwerkcomputer 20 angeschlossen.

Ferner ist in der Figur mit 22 eine kryptografische Einheit bezeichnet, die in einem Metallgehäuse 24, das mittels eines Schlosses 26 verschließbar ist, einen Chipkarten-Lesemodul 28 und eine in diesem eingesteckte Chipkarte 30 enthält. Die Chipkarte 30 kann von einer hierzu autorisierten Person jederzeit aus dem Lesemodul 28 entfernt und wieder in diesen eingeführt werden. Das Entfernen der Chipkarte wird aber durch einen Sonsor 32 überwacht, der auch in der Lage ist festzustellen, ob die Chipkarte gewechselt wurde. Die kryptografische Einheit enthält einen weiteren Sensor 34, der auf Manipulationsversuche an dem Gehäuse 24, insbesondere auf ein nichtautorisiertes Öffnen des Gehäuses 24 anspricht. Es können selbstverständlich mehrere Sensoren 34 vorgesehen sein, um verschiedene Bereich des Gehäuses 24 zu überwachen. Die Sensoren 32 und 34 sind über eine Signalleitung 36 mit dem Controller 16 verbunden.

Die Chipkarte 30 kann mindestens zwei Applikationen verarbeiten, nämlich die Autentifizierung eines Bankautomaten im Netz und die Autentifizierung eines Benutzers. Die kryptografische Einheit 24 dient dazu, von dem PC 14 des Bankautomaten über eine gesicherte Leitung 37 erhaltene Daten zu verschlüsseln oder zu entschlüsseln, Signaturen zu berechnen und zu prüfen, Geheimschlüssel zu speichern, eine über die Tastatur 18 und den Controller 16 eingegebene Geheimzahl eines Benutzers zwischenzuspeichern, die Geheimzahl für eine Transaktion zu verschlüsseln, die Geheimzahl zu verifizieren und eine Rückmeldung zu erzeugen, sich gegenüber einer weiteren Datenverarbeitungsanlage, z.B. dem Controller 16 und dem PC 14 zu autentifizieren sowie über die Signalleitung 36 den Controller 16 zu informieren, wenn das Gehäuse 24 geöffnet wird oder Manipulationen an dem Gehäuse entdeckt werden oder die Chipkarte entfernt oder getauscht wird.

Der Controller 16 umfaßt einen Prozessor 38 sowie einen Zwischenspeicher 40, in dem von der Tastatur 18 eingegebene Daten gespeichert werden. Ferner umfaßt der Controller 16 eine Auswerteeinheit 42, welche mit der Signalleitung 36 verbunden ist sowie eine weitere Auswerteeinheit 44, welche die Autentizität der kryptografischen Einheit 22 überwacht. Der Controller 16 ist ferner über einen logisch sicheren Kanal 46 mit der kryptografischen Einheit 22 und über einen sicheren Kanal 48 mit dem PC 14 verbunden, die elektrischen Signale werden allerdings über die Strecke 48/37 übertragen.

Der Controller 16 hat die Aufgabe, zunächst die von der Tastatur 18 erhaltenen Signale in Daten zu wandeln und diese zwischenzuspeichern. Ferner überwacht die Auswerteeinheit 42 die Sensoren 32 und 34 und erzeugt ein Alarmsignal, sofern die Sensoren 32 und 34 auf eine Entnahme der Chipkarte 30 oder auf Manipulationen an dem Gehäuse 24 ansprechen. Mit dem Alarmsignal wird eine Alarmeinrichtung 50 aktiviert, die einen akustischen oder optischen Alarm geben kann und sich beispielsweise am Ort des Bankautomaten oder des Host-Computers befinden kann. Ferner hat der Controller 16 die Aufgabe, bei einem Alarm die Datenverarbeitung so einzuschränken, daß über die Tastatur 18 eingegebene Signale nicht mehr von dem PC 14 abgerufen werden können. Gleichzeitig werden zumindest Teile der Stromversorgung des Bankautomaten durch den Controller 16 abgeschaltet und sämtliche Daten im Zwischenspeicher 40 gelöscht.

Der PC 14 ruft im Normalbetrieb die über die Tastatur 18 eingegebenen Daten aus dem Zwischenspeicher 40 des Controllers 16 ab und führt sie ggf. der kryptografischen Einheit 22 zu, wo sie geprüft und verschlüsselt werden. Die verschlüsselten Daten werden dann über einen gesicherten Kanal 52 an den Host-Computer 20 übersandt, wo sie entschlüsselt und verarbeitet werden. Der Host-Computer 20 sendet ebenfalls verschlüsselte Daten über den gesicherten Kanal 52 an den PC 14 des Bankautomaten. Die verschlüsselten Daten werden in der kryptografischen Einheit 22 wieder entschlüsselt und können dann in dem PC 14 weiter verarbeitet werden.

Die Tatsache, daß in der Figur separate Einheiten dargestellt sind, bedeutet nicht, daß sämtliche Einheiten in separaten Gehäusen angeordnet sein müssen. So können die Tastatur 18, der Controller 16 und auch die kryptografische Einheit 22 innerhalb eines Gehäuses oder auf einer Platine angeordnet sein. Umgekehrt können der PC 14 und die kryptografische Einheit 22 in einem Gehäuse oder auf einer Platine, insbesondere in dem Tresor eines Bankautomaten untergebracht werden. In diesem Fall kann das Metallgehäuse 24 der kryptografischen Einheit und die ihm zugeordneten Sensoren 34 entfallen.

Bei der vorstehend beschriebenen Lösung wird im Falle einer unerlaubten Manipulation der kryptografischen Einheit, z.B. im Falle des Entfernens der Chipkarte oder des unerlaubten Öffnens des Gehäuses oder des Ersetzens der Chipkarte durch eine nichtautorisierte manipulierte Chipkarte der Bankautomat sofort außer Betrieb gesetzt. Gleichzeitig wird ein visueller oder akustischer Alarm gegeben. Durch den Einsatz von Standardkomponenten wie Chipkarten und Chipkartenleser werden besonders preiswerte Komponenten verwendet. Bei der erfindungsgemäßen Lösung werden nicht nur im Falle eines unautorisierten Manipulationsversuches die Daten oder Datenstrukturen in dem Speicher des Controllers gelöscht, sondern auch der Bankautomat zumindest weitgehend außer Betrieb gesetzt. Zudem werden Manipulationsversuche an eine Überwachungsstelle gemeldet.

## Patentansprüche

1. Vorrichtung zum Durchführen gesicherter Transaktionen an einem Bankautomaten, der eine Datenverarbeitungsanlage (14) enthält, die mit einem Host-Computer (20), einer Bank und über einen Controller (16) mit einer Dateneingabevorrichtung (18) verbunden ist, wobei eine kryptografische Einheit (22) zum Verschlüsseln und Entschlüsseln von Daten vorgesehen ist, die zwischen der Datenverarbeitungsanlage (14) und dem Host-Computer (20) ausgetauscht werden, **dadurch gekennzeichnet, daß** die kryptografische Einheit (22) eine Chipkarte (30), deren Chip für die Ausführung der kryptografischen Funktionen ausgebildet ist, und einen Chipkarten-Lesemodul (28) umfaßt, der mit der Datenverarbeitungsanlage (14) des Bankautomaten verbunden ist, und daß die kryptografische Einheit (22) mindestens einen Sensor (32, 34) hat, der auf unautorisierte Manipulationen an der kryptografischen Einheit (22), dem Lesemodul (28) und/oder der Chipkarte (30) anspricht und ein entsprechendes Signal an eine übergeordnete Instanz abgibt.

2. Vorrichtung nach Anspruch 1, **dadurch gekennzeichnet, daß** die kryptografische Einheit (22) ein gesichertes abschließbares Gehäuse (24) hat und daß der mindestens eine Sensor (34) auf das unautorisierte Öffnen des Gehäuses anspricht.

3. Vorrichtung nach Anspruch 2, **dadurch gekennzeichnet, daß** das Gehäuse (24) aus Metall ist.

4. Vorrichtung nach einem der Ansprüche 1 bis 3, **dadurch gekennzeichnet, daß** der mindestens eine Sensor (32) auf das unautorisierte Entfernen der Chipkarte (30) aus dem Lesemodul (28) anspricht.

5. Vorrichtung nach einem der Ansprüche 1 bis 4, **dadurch gekennzeichnet, daß** der mindestens eine Sensor oder ein weiterer Sensor auf den Austausch der Chipkarte (30) anspricht.

6. Vorrichtung nach einem der Ansprüche 1 bis 5, **dadurch gekennzeichnet, daß** die übergeordnete Instanz der Controller (16) ist.

7. Vorrichtung nach Anspruch 6, **dadurch gekennzeichnet, daß** der Controller (16) in Abhängigkeit eines von der kryptografischen Einheit (22) erhaltenen Sensorsignals eine Alarmeinrichtung (50) betätigt.

8. Vorrichtung nach Anspruch 7, **dadurch gekennzeichnet, daß** die Alarmeinrichtung am Ort des Bankautomaten angeordnet ist.

9. Vorrichtung nach Anspruch 7, **dadurch gekennzeichnet, daß** die Alarmeinrichtung am Ort des Host-Computers (20) angeordnet ist.

10. Vorrichtung nach einem der Ansprüche 6 bis 9, **dadurch gekennzeichnet, daß** der Controller (16) die Stromversorgung für die Datenverarbeitungsanlage (14) steuert und daß er in Abhängigkeit eines von der kryptografischen Einheit (22) erhaltenen Sensorsignals mindestens einen Teil der Stromversorgung der Datenverarbeitungsanlage (14) abschaltet.

11. Vorrichtung nach einem der Ansprüche 6 bis 10, **dadurch gekennzeichnet, daß** der Controller (16) einen Zwischenspeicher (40) zum Speichern von von der Dateneingabeeinrichtung (18) empfangenen Daten hat und daß der Controller die Weitergabe der in dem Zwischenspeicher (40) gespeicherten Daten an die Datenverarbeitungsanlage (14) des Bankautomaten in Abhängigkeit eines von der kryptografischen Einheit (22) empfangenen Sensorsignals unterbricht.

12. Vorrichtung nach einem der Ansprüche 6 bis 11, **dadurch gekennzeichnet, daß** der Controller einen Zwischenspeicher (40) zur Speicherung von von der Dateneingabeeinrichtung empfangenen Daten hat und daß er die in dem Zwischenspeicher (40) gespeicherten Daten in Abhängigkeit eines von der kryptografischen Einheit (22) empfangenen Sensorsignals löscht.

13. Vorrichtung nach einem der Ansprüche 1 bis 12, **dadurch gekennzeichnet, daß** die kryptografische Einheit (22) innerhalb des Tresors des Bankautomaten angeordnet ist.

14. Vorrichtung nach einem der Ansprüche 1 bis 13, **dadurch gekennzeichnet, daß** der Controller (16) innerhalb des Tresors des Bankautomaten angeordnet ist.

15. Vorrichtung nach einem der Ansprüche 1 bis 14, **dadurch gekennzeichnet, daß** der Controller (16) und/oder die kryptografische Einheit (22) auf einer Platine der Datenverarbeitungsanlage (14) des Bankautomaten angeordnet sind.
